# EUROPÄISCHE PATENTSCHRIFT

(11) **EP 2 558 517 B1**
(45) Veröffentlichungstag und Bekanntmachung des Hinweises auf die Patenterteilung: **05.10.2016**
(21) Anmeldenummer: 11715209.0
(22) Anmeldetag: 13.04.2011
(51) Int. Cl.: C08G 69/16, C08K 3/00, C08L 77/00, C08K 7/00

(54) **VERFAHREN ZUR HERSTELLUNG VON MODIFIZIERTEM POLYAMID 6**
METHOD FOR PRODUCING MODIFIED POLYAMIDE 6
PROCÉDÉ DE PRÉPARATION DE POLYAMIDE 6 MODIFIÉ

(30) Priorität: 14.04.2010 EP 10159952
(43) Veröffentlichungstag der Anmeldung: 20.02.2013
(73) Patentinhaber: Wingspeed AG, 4312 Magden (CH)
(72) Erfinder: DÜRR, Georg, CH-4312 Magden (CH); HERBST, Alexander, CH-4312 Magden (CH)
(74) Vertreter: Vossius & Partner Patentanwälte Rechtsanwälte mbB
(86) Internationale Anmeldenummer: PCT/EP2011/055760
(87) Internationale Veröffentlichungsnummer: WO 2011/128352

(56) Entgegenhaltungen:
- EP-A1- 1 088 852
- EP-A2- 0 791 618
- WO-A1-01/12678
- WO-A1-98/02481
- DE-A1- 2 102 247
- US-A- 3 454 689

## Beschreibung

Gegenstand der vorliegenden Erfindung ist ein Verfahren zur Herstellung von modifiziertem Polyamid 6, modifiziertes Polyamid 6 erhältlich nach diesem Verfahren, sowie Formkörper, Folien, Fasern und Schäume erhältlich aus dem modifizierten Polyamid 6. Insbesondere betrifft die Erfindung ein Verfahren bei dem Polyamid 6 in Gegenwart eines porösen anorganischen Materials hergestellt wird.

Polyamid 6 gehört zu den bedeutendsten thermoplastischen Polymeren und zeichnet sich durch eine hohe Festigkeit, Steifigkeit und Zähigkeit aus; außerdem besitzt es eine gute Chemikalienbeständigkeit und Verarbeitbarkeit. Insgesamt werden weltweit ca. 4000 kt Polyamid 6 pro Jahr hergestellt.

Der größte Teil der Polyamidproduktion wird als Synthesefaser für Textilien verwendet. Außerdem findet es Verwendung zur Herstellung von schwer zerbrechlichen Haushaltsgegenständen und technischen Teilen, an deren Abriebfestigkeit hohe Ansprüche gestellt werden. Aufgrund seiner Beständigkeit gegen Schmier- und Kraftstoffe bei Temperaturen bis über 150 °C wird es auch im Fahrzeugbau für Motoranbauteile wie Ansaugsysteme, Kraftstoffleitungen, Motorabdeckungen usw. eingesetzt.

Es ist bekannt, dass Polyamid 6 durch Ringöffnungspolymerisation aus ε-Caprolactam mit Wasser als Starter entsteht (EP1141089A1, EP688808B1, US020020002266A1, WO2004041910A1 etc.).

Es ist auch bekannt, dass durch Polymerisation von ε-Caprolactam entstandenes Polyamid 6 gleichgewichtsbedingt etwa 11 bis 13 Gewichtsprozent Oligomere und monomeres ε-Caprolactam enthält. Da sowohl ε-Caprolactam als auch Oligomere im Wasser löslich und extrahierbar sind, werden infolge dessen die mechanischen Eigenschaften des Polyamid 6 stark beeinträchtigt. Um dies zu vermeiden, bedarf es einiger zusätzlicher kostenintensiver Verfahrensschritte (EP1322694A1, EP1165660A1, EP1333049B1, EP847414A1, WO2002026865A1 etc.).

Eine der Möglichkeiten die mechanischen Eigenschaften des Polyamid 6 zu verbessern stellt die Herstellung der sogenannten verzweigten Polyamide dar. So beschreibt DE4100909A1 die Herstellung von Polyamiden, deren mechanische Eigenschaften wie Zähigkeit oder Spannungs-dehnungsverhalten durch gezieltes Verzweigen verbessert werden. Die mechanischen Kennwerte der so hergestellten Polyamidmassen werden jedoch nur unwesentlich erhöht.

Aus der Literatur ist bekannt, dass die Morphologie und die mechanischen Eigenschaften der Thermoplaste durch Zugabe von Elastomeren beeinflusst wird. Die Kombination von Polyamid 6 mit Elastomeren ist in vielen Patenten beschrieben:
Vielfach werden elastische Polymere wie beispielweise Polyolefine auch auf der Basis von Kautschuk, dem Polyamid 6 beigemischt. Beispielsweise ist die Kombination von Polyamiden und elastomeren Polypropylenen aus EP0640650B1 und DE4131908C bekannt. DE4202110A1 beschreibt die Herstellung der hochschlagzähen Formmasse durch Zulegieren der säuremodifizierten EVA-Copolymere zu Polyamid 6, was durch Schmelz-Compoundierung erfolgt. Der Nachteil dieser bzw. vergleichbarer Verfahren besteht u.a. in der Schwierigkeit, die genügend gleichmäßige Verteilung der Elastphase in der Polyamid-Matrix im Compoundierungsschritt zu erreichen. Zudem ist die erzielte Verbesserung der mechanischen Charakteristiken dieser Komposite verhältnismäßig gering.

Die Basiseigenschaften des Polyamid 6 können durch nachträgliche Zugabe von anorganischen Zusatzstoffen oder Additiven modifiziert werden. Diese gezielte Optimierung der Eigenschaftsprofile wird als Compoundierung bezeichnet und erfolgt überwiegend in Extrudern (hauptsächlich gleichläufige Doppelschneckenextruder, aber auch gegenläufige Doppelschneckenextruder und Ko-Kneter). Weit verbreitet ist die Verstärkung des Polyamid 6 mit Glasfasern oder mit mineralischen Füllstoffen wie Calciumcarbonat, Talkum, Kieselsäure, Schichtsilicate, TiO₂ etc.

Das glasfasermodifizierte Polyamid 6 (siehe z. B. EP378088A2) weist eine deutliche Verbesserung in der Zugfestigkeit und Steifigkeit auf. Einsatzgebiete von glasfasermodifiziertem Polyamid 6 sind Bauteile mit hoher Steifigkeit und hoher Kerbschlagzähigkeit (wie z.B. Karrosserieteile für Autos und Bikes, Elektrowerkzeuge). Die Glasfasermodifizierung verbessert diese Eigenschaften, wenn die Grenzflächenverbindungen zwischen dem anorganischen Fasermaterial und dem organischen Polyamidmaterial über eine chemische Reaktion erfolgen. Zu diesem Zweck werden die Glasfasern zusätzlich mit teuren Organosiliciumverbindungen als Haftvermittler behandelt (DE4021393A1).

In den Patenten US5013786A und EP1088852B1 wird das Vermischen von endkondensiertem Polyamid 6 mit mineralischen pulverförmigen Zusatzstoffen zwecks Verstärkung beschrieben. Nachteilig erweist sich hierbei, dass eine gleichmäßige Verteilung des feinteiligen Füllstoffes schwer zu erreichen ist. Analog der Compoundierung mit den Glasfasern muss die fehlende kovalente Bindung der mineralischen Stoffe mit der Polyamid 6-Matrix durch Oberflächenmodifizierung mit Aminosilanen ermöglicht werden. Diese chemische Modifizierung stellt allerdings eine zusätzlichen zeit- und kostenintensiven Verfahrensschritt dar (Beispiel DE19961972A1).

In einem Projekt der Universität Kaiserslautern (Institut für Verbundwerkstoffe, 2002) zur Herstellung eines Verbundwerkstoffes aus Polyamid 6 und nanoskaligen Schichtsilicaten wurden stark veränderte Eigenschaften wie eine hohe Steifigkeit des Verbundwerkstoffs bei gleichzeitiger Verbesserung der Zähigkeit und der Barriere-Eigenschaften beschrieben. Allerdings bewegt sich die spezifische Verschleißrate des so verstärkten Verbundstoffes in ähnlichen Bereichen wie die des reinen Polyamid 6. Auch in diesem Fall liegt der Grund wahrscheinlich in der Inkompatibilität des hydrophilen anorganischen Minerals und der hydrophoben organischen Polymermatrix. Als sehr problematisch erweist sich zudem die Extrusion des feinteiligen Schichtsilicates.

DE102005041966A1 beschreibt Polyamide mit hoher Flammwidrigkeit und Glühdrahtbeständigkeit, welche durch die Verwendung verschiedener Additive (insbesondere P-haltiger Verbindungen) erreicht werden. Darüber hinaus sind optionale faserförmige Verstärkungsstoffe wie Glasfasern und Füllstoffe wie Erdalkalicarbonate und amorphe Kieselsäure, zur Verbesserung der Polyamid-Eigenschaften beschrieben, die entweder während der Polymerisation oder in einem folgenden Compoundierungsprozess in die Polymerschmelze eingemischt werden. Über die mechanischen Eigenschaften der Polyamide wird in dieser Patentanmeldung nichts beschrieben.

In der DE 2102247A1 wird ein Verfahren offenbart zur Herstellung von Schaumstoffen auf Polyamidbasis mittels anionischer Polymerisation von Lactamen in Anwesenheit von Treibmitteln und Zellenreglern, wobei die Schaumstruktur durch die gleichzeitige Anwesenheit eines oder mehrerer Schaumstabilisierungsmittel und von feinverteilten porösen Stoffen hervorgerufen wird.

Die WO 01/012678 beschreibt ein Verfahren zur Herstellung einer Polyamid-Nanoverbundsstruktur. Das Verfahren umfasst die Herstellung einer wässrigen Mischung aus einem Silikatmaterialgemisch und einem Polyamid Monomer und die anschließende Polymerisierung des Polyamide Monomers um eine Nanoverbundsstinktur herzustellen.

Die US 3454689A1 beschreibt ein Verfahren zur Modellierung von Lactam Polymeren ohne dabei auf die Modellierung anhand einer Gussform angewiesen zu sein. Dabei wird das Lactam zusammen mit einem Katalysator und einem Co-Katalysator in ein auf mindestens 140°C erhitztes Gefäß gegossen. Nach der Polymerisierung des Lactams wird es in die gewünschte Form gebracht.

In der WO 199802481A1 wird ein Formverfahren von Polyamid offenbart. Dieses umfasst die Befüllung einer Gussform mit mindestens Lactam, einem Katalysator, einem Aktivator und einer anorganischen Füllmasse, wobei die anorganische Füllmasse getrennt von den weiteren Bestandteilen eingefüllt wird. Die Polymerisierung des Lactams wird durch die Wirkung des Aktivators und des Katalysators ab einer gewissen Aktivierungstemperatur erreicht.

Aufgabe der Erfindung ist die Bereitstellung eines kostengünstigen Verfahrens zur Herstellung von Polyamid 6, das sich durch extrem hohe Schlagzähigkeit bei gleichzeitig ausgezeichneter Elastizität sowie guter Hitze- und Chemikalienbeständigkeit auszeichnet. Eine weitere Aufgabe ist die Bereitstellung eines hochschlagzähen, elastischen und temperaturbeständigen Polyamid 6.

Diese Aufgaben werden gelöst durch ein Verfahren zur Herstellung von modifiziertem Polyamid 6, wobei die Polymerisation von ε-Caprolactam in Gegenwart eines anorganischen Materials mit offener Porenstruktur durchgeführt wird, sowie ein mit diesem Verfahren erhältliches Polyamid 6.

Polyamid 6 (auch Nylon-6, Polycaprolactam oder Perlon^{®} genannt) lässt sich bekanntermaßen aus ε-Caprolactam in Gegenwart von etwas Wasser gewinnen, wobei als Zwischenstufe ε-Aminocapronsäure gebildet wird:

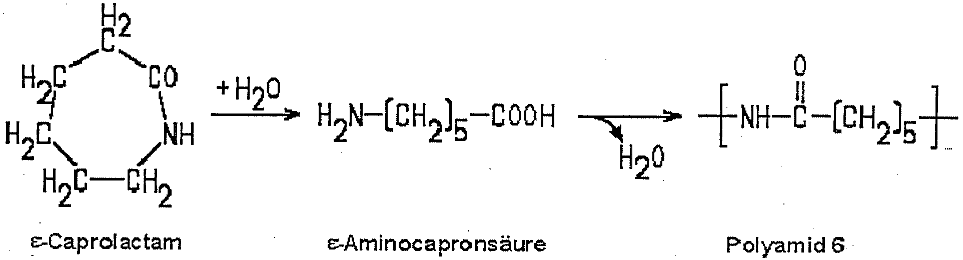

Das erfindungsgemäße Verfahren beruht auf dieser bekannten Reaktion, ist jedoch dadurch gekennzeichnet, dass die ringöffnende Polymerisation des ε-Caprolactams in Gegenwart eines anorganischen Materials mit offener Porenstruktur durchgeführt wird, wobei das poröse anorganische Material eine BET Oberfläche von 50 m²/g bis 3000 m²/g, ein Porenvolumen von 0,1 bis 15,0 cm³/g und eine mittlere Partikelgröße von 0,5 µm bis 500 µm aufweist.

Vorzugsweise wird zuerst ein Teil des ε-Caprolactams in Wasser gelöst, um eine Starterlösung herzustellen. Als ε-Caprolactam kann handelsübliches ε-Caprolactam eingesetzt werden oder es wird nach üblichen Verfahren (z.B. durch Oximierung von Cyclohexanon mit Hydroxylaminsulfat und anschließende Beckmann-Umlagerung des Oxims in Schwefelsäure-Oleum; alternativ kann das Cyclohexanonoxim z.B. durch Photonitrosierung von Cyclohexan und anschließende Umlagerung oder Cyclohexan-Nitrierung und partielle Hydrierung zum Oxim hergestellt werden) hergestellt. Der Wassergehalt der Starterlösung beträgt 2-90 Gew.% bezogen auf das Gesamtgewicht der Starterlösung, bevorzugter 10-40 Gew.%, noch bevorzugter 15-30 Gew.%, besonders bevorzugt 17-27 Gew.% und insbesondere bevorzugt 20-24 Gew.%. Die Reaktion verläuft endotherm und kann durch kurzzeitige Erwärmung (z.B. für einen Zeitraum von bis zu 5 Minuten) auf 30-40°C beschleunigt werden, wenn dies gewünsche wird. Durch hydrolytische Ringöffnung entsteht dabei die für den Kettenstart der Polymerisation benötigte ε-Aminocapronsäure.

Die Temperatur der Starterlösung wird vorzugsweise bei 10-30°C gehalten, besonders bevorzugt 15 bis 25°C. Die Zugabe des porösen Materials erfolgt zügig und so lange, bis das gesamte poröse Material in der Starterlösung suspendiert ist, welche (Starterlösung) wieder absolut klar und transparent wird. Nach Beendigung der Zugabe wird das Rühren eingestellt und das Caprolactam bzw. die Aminocapronsäure hydrolysieren gelassen. Die Hydrolyse findet üblicherweise bei einer Temperatur von 200 bis 400°C, vorzugsweise von 250 bis 300°C und besonders bevorzugt bei 260 bis 280°C statt. Die Reaktionsdauer der Hydrolysereaktion beträgt üblicherweise 0,1 bis 10 h, bevorzugt 0,5 bis 5 h und besonders bevorzugt von 1 bis 3 h. Der Systemdruck während der Hydrolyse richtet sich nach dem Wassergehalt, beträgt jedoch max. 5 MPa (50 bar). Nach dem Ablauf der Hydrolyse wird das System kontinuierlich entspannt, bis der Druck auf 0,1 bis 0,2 MPa (1 bis 2 bar) abgebaut ist.

Gemäß einer Ausfuhrungsform wird die Polymerisation chargenweise in einem Autoklav durchgeführt.

Das anorganische Material mit offener Porenstruktur wird zu der Starterlösung zugegeben und diese danach zu vorzugsweise schmelzflüssigem ε-Caprolactam unter intensivem Rühren zugegeben. Von der Gesamtmenge an eingesetztem ε-Gaprolactam werden vorzugsweise 2-45 Gew.%, bevorzugter 5-27 Gew.% und insbesondere bevorzugt 10-23 Gew.% für die Herstellung der Starterlösung verwendet; die restliche Menge ε-Caprolactam wird vorzugsweise in schmelzflüssiger Form im Reaktor vorgelegt.

Die Wassermenge bezogen auf das gesamte Reaktionsgemisch beträgt vorzugsweise 0,5-10 Gem.%, bevorzugter 1-6 Gew.% und insbesondere bevorzugt 2-4 Gew.%.

Die Polykondensationsreaktion wird üblicherweise bei einen Druck von 0 bis 1 MPa (0 bis 10 bar), vorzugsweise 0 bis 0,5 MPa (0 bis 5 bar) und besonders bevorzugt 0,1 bis 0,3 MPa (1 bis 3 bar) durchgeführt. Die Temperatur im Reaktor beträgt vorzugsweise 200 bis 400°C, besonders bevorzugt 250 bis 300°C und insbesondere bevorzugt 260 bis 280°C. Die Verweilzeit richtet sich nach der Lösungsviskosität und liegt üblicherweise im Bereich von 1 bis 5 h, insbesondere 2,5 bis 3,5 h.

Die Polymerisation kann auch kontinuierlich in einer Reaktorkaskade oder einem vertikalen Rohrreaktor durchgeführt werden. Auch hier wird das poröse Material vorzugsweise erst mit einer Starterlösung vermischt und die erhaltene Suspension dann dem Reaktor bzw. der Kaskade zugeführt.

Das anorganische Material besitzt eine offene Porenstruktur, d.h. die Poren stehen mit dem umgebenden Medium in Verbindung. Zusätzlich vorhandene geschlossene Poren (d.h. Poren, die in sich abgeschlossen sind und kein Medium eindringen lassen) sind möglich jedoch nicht erforderlich. Das poröse anorganische Material kann durch BET-Oberfläche, Porenvolumen und mittlere Partikelgröße näher charakterisiert werden.

Die nach ISO 9277 (1995) bestimmte BET-Oberfläche (Details des Verfahrens werden weiter unten beschrieben) beträgt 50 bis 3000 m²/g, bevorzugt 50 bis 2000 m²/g, bevorzugter 100 bis 1000 m²/g, besonders bevorzugt 200-600 m²/g.

Was das Porenvolumen betrifft (Details des Verfahrens werden weiter unten beschrieben) beträgt es 0,1 bis 15,0 cm³/g, bevorzugt 0,1 bis 5,0 cm³/g, bevorzugter 0,2 bis 3,0 cm³/g und besonders bevorzugt 0,3 bis 1,5 cm³/g.

Die mittlere Partikelgröße d₅₀ (erhalten aus der nach ISO 13320 bestimmten Partikelgrößenverteilung, Details siehe weiter unten), beträgt 0,5 bis 500 µm, bevorzugt 0,7 bis 50 µm und besonders bevorzugt 1 bis 6 µm.

Besonders bevorzugte Materialien weisen eine mittlere Partikelgröße d₅₀ von 1-6 µm, ein Porenvolumen im Bereich von 0,3 bis 1,5 cm³ und eine BET Oberfläche von 200-600 m²/g auf.

Das poröse anorganische Material ist inert gegenüber den bei der Polymerisation vorhandenen Komponenten, d.h. geht keine chemische Reaktion mit diesen ein und wird daher chemisch nicht verändert. Das poröse anorganische Material wird als Pulver eingesetzt und ist bei Raumtemperatur fest.

Geeignete Beispiele poröser anorganischer Materialien sind Bentonit, Aluminiumoxid, Kaolin, pyrogene Kieselsäuren, Aerogele auf Silicatbasis, Zeolithe, Aktivkohle und Silicagele.

Besonders bevorzugte poröse anorganische Materialien sind Silicagele, Zeolithe und Aktivkohle. Davon besonders bevorzugt sind Silicagele und Zeolithe und insbesondere Silicagele.

Das poröse anorganische Material wird vorzugsweise in einer Menge von 0,1 bis 50 Gew.% bezogen auf eingesetztes ε-Caprolactam zugegeben, bevorzugter 0,5 bis 15 Gew.% und besonders bevorzugt 1 bis 10 Gew.%; insbesondere bevorzugt ist eine Menge von 1 bis 5 Gew.%.

Zum Reaktionsgemisch können übliche Hilfsstoffe wie Schaumverhütungsmittel, Stabilisatoren, Antioxidantien etc. in üblichen Mengen zugegeben werden.

Ein weiterer Gegenstand der vorliegenden Erfindung betrifft daher modifiziertes Polyamid 6, erhältlich durch das hierin beschriebene erfindungsgemässe Verfahren, umfassend ein poröses anorganisches Material, wobei sich die polymere Matrix auch innerhalb der Poren befindet.

Der besondere Vorteil des erfindungsgemäß hergestellten Polyamid 6 liegt im außergewöhnlich guten Verbund zwischen Polymermatrix und Verstärkungsstoff, wodurch herausragende Eigenschaften wie extrem hohe Schlagzähigkeit bei ausgezeichneter Elastizität, sowie verbesserte Hitze- und Chemikalienbeständigkeit erreicht werden.

Die Erfinder wollen nicht an eine Theorie gebunden sein, vermuten aber, dass bedingt durch die mit ε-Caprolactam befüllten Poren die Partikel des porösen anorganischen Materials in die Polyamidmatrix einpolymerisiert werden. Das Gerüst des so hergestellten Polyamidcomposites ist monolith. Es wird angenommen, dass die porösen Partikel mit der Polyamidmatrix physikalisch gebundene, mechanische Gelenke bilden, die die Polymerketten einerseits fest zusammenhalten und andererseits die extreme Biegsamkeit und Gelenkigkeit verleihen wodurch sich die Kennwerte für Schlagzähigkeit und Zugfestigkeit enorm erhöhen und die Hitze- und Chemikalienbeständigkeit des Polyamids verbessert wird.

Einsatzgebiete des so hergestellten, hochschlagzähen, elastischen und temperaturbeständigen Polyamid 6 liegen im Automobilbau, Maschinenbau, Bauwesen etc.

Das erfindungsgemäß hergestellt Polyamid 6 kann mit üblichen Methoden zu Formkörpern, Folien, Fasern und Schäumen verarbeitet werden; insbesondere kann es mit Spritzgussverfahren oder Extrusionsverfahren weiterverarbeitet werden. Beispiele für Gegenstände aus erfindungsgemäß hergestelltem Polyamid 6 sind Gehäuseteile von Maschinen/Geräten aller Art, Karosserieteile, allgemeine Verkleidungsteile, allgemeine Gebrauchsgegenstände, Haushaltsgegenstände, Fassadenverkleidungen, Scharniere für Industrie- und Bauanwendungen, Federteile und Gelenkteile. Besonders zu erwähnen sind durch Spritzguss hergestellte Bauteile für Autos und Motorräder sowie Gehäuseteile von Haushaltsgeräten, Haushaltsgroßgeräten, etc.

Die vorliegende Erfindung betrifft somit auch die Verwendung des erfindungsgemässen, modifizierten Polyamids 6 zur Herstellung von Formkörpern, Folien, Fasern und Schäumen, wobei durch Spritzguss Bauteile für Autos oder Motorräder oder Gehäuseteile hergestellt werden.

Ebenfalls umfasst von der vorliegenden Erfindung sind Formkörper, Folien, Faser und Schäume erhältlich aus einem modifizierten Polyamid 6 gemäß vorliegende Erfindung.

Das erfindungsgemäße Polyamid 6 kann, falls gewünscht, mit herkömmlichen Farbmitteln nach bekannten Verfahren eingefärbt werden. Dazu kann das Farbmittel entweder bereits bei der Polymerisation zugesetzt werden oder es wird bei der Verarbeitung z.B. durch Extrusion, Kneten zugesetzt.

### Messmethoden

### Für modifiziertes Polyamid 6:

Schlagzähigkeit: nach Charpy gemäß DIN EN ISO 179-1eU. (23°C; trocken) Kerbschlagzähigkeit: nach Charpy gemäß DIN EN ISO 179-1eA (23°C; trocken) Beim Kerbschlagbiegeversuch wird eine gekerbte Probe, deren beide Enden an Widerlagern anliegen, mit einem Schlag mittels Pendelhammer zerbrochen. Die Geschwindigkeit des Hammers im Pendelschlagwerk beträgt 5 m/s. Die beim Durchbrechen der Probe verbrauchte Schlagarbeit dividiert durch den Probenquerschnitt am Kerb bezeichnet man als Kerbschlagzähigkeit.

Zugfestigkeit, Zug-E-Modul, Bruchdehnung: gemäß DIN EN ISO 527-1 an Zugstäben nach Lagerung für 16 bis 24 h bei 23°C, Prüfgeschwindigkeit 5 mm/min.

### Für poröse Stoffe:

Die Bestimmung der Oberfläche nach BET und des Porenvolumens erfolgt nach ISO 9277 (1995) und wird mittels volumetrischen Adsorptionsmessungen mit N₂ im relativen Druckbereich von 0 bis 1 bar bei 77,2 K durchgeführt. Hierzu werden den porösen Stoffen in dem auf konstanter Temperatur gehaltenen Probebehälter schrittweise gasförmiges N₂ zugeführt. Die aufgenommenen Adsorbatmengen werden gemessen, wenn sich ein Gleichgewichtszustand zwischen dem Adsorbat und dem Adsorptiv gebildet hat. Mittels der erhaltenen Adsorptionsisothermen, die das adsorbierte Volumen als Funktion des relativen Druckes *p*/*p*₀ darstellen, können das Gesamtporenvolumen, die Porengrößen, die Innere- und die BET-Oberfläche bestimmt werden.

Die gesamte spezifische Oberfläche (BET-Oberfläche) wird nach dem von BRUNAUER, EMMETT und TELLER (BET) vorgeschlagenen Verfahren bestimmt. Dabei erfolgen die Berechnungen der BET-Oberfläche mittels Linearisierung der Adsorptionsdaten durch die BET-Gleichung im Relativdruckbereich *p*/*p*₀=0,05 - 0,3.

Das Gesamtporenvolumen wird direkt aus der Stickstoffisotherme bei einem relativen Druck nahe 1 bestimmt. Über einen sogenannten *conversion factor* (mit (liq.N₂) = 808,6 kg/m³ ist dieser 1, 5468.10⁻³) kann die adsorbierte Gasmenge in ein Flüssigkeitsvolumen umgerechnet werden.

Die Partikelgrößenverteilung wird nach ISO 13320 gemessen. Es handelt sich um Partikelgrößenbestimmung nach dem Prinzip der Laserbeugung, wobei alle Partikel einer Probe das Licht eines monochromen Laserstrahls beugen. Aus den winkelabhängigen Lichtintensitäten wird durch eine komplexe Mathematik die Partikelgrößenverteilung berechnet. Der d₅₀-Wert entspricht der mittleren Partikelgröße.

### Beispiele

### Beispiel 1

Eingesetzte Rohstoffe:
festes ε-Caprolactam,
Wasser
Silicagel mit folgenden Kennwerten: mittlere Partikelgröße d₅₀ 1,5 µm, BET-Oberfläche 250 m²/g, Porenvolumen 1,4 cm³/g

Monomeres ε-Caprolactam wurde in den Autoklav eingebracht. In einem separaten Gefäß wurde eine 78-% ε-Caprolactam-Wasser-Lösung als Starterlösung hergestellt und anschließend 20 Gew. % Silicagel (bezogen auf die 78-% ε-Caprolactam-Wasser-Lösung) unter ständigem Rühren bei Raumtemperatur in die Starterlösung eingerührt.

Die frisch hergestellte Suspension wurde durch langsames Einrühren in schmelzflüssiges ε-Caprolactam im Autoklav bei Temperaturen von ca. 120°C zugegeben. Die Wassermenge der Suspension wurde dabei so eingestellt, dass sich bezogen auf das gesamte Reaktionsgemisch 3,5 Gew.% ergaben. Die Hydrolyse wurde innerhalb von 2 h bei einer Produkttemperatur von ca. 270°C und einem Systemdruck von ca. 0,5 MPa (5 bar) durchgeführt. Im Anschluss an die Dekompressionsphase, bei der durch langsames, kontinuierliches Entspannen der Systemdruck abgebaut wurde, wurde, die Polykondensation bei einer Produkttemperatur von ca. 270°C eingeleitet. Nach einer Verweilzeit von 3,0 h wurde das fertige Polymerisat modifiziert mit 4 Gew.% (bezogen auf eingesetztes Caprolactam) Silicagel erhalten, das folgende Kennwerte aufwies:
Zugfestigkeit: 85,9 MPa,
Bruchdehnung 25,8 ± 7,5 %,
Zug-E-Modul 3250 ± 118 MPa,
Schlagzähigkeit (DIN EN ISO 179/1 eU trocken): kein Brechen (NB),
Kerbschlagzähigkeit(DIN EN ISO 179/1eA. trocken): kein Brechen (NB).

### Beispiel 2

Eingesetzte Rohstoffe:
festes ε-Caprolactam,
Wasser
Zeolith 13X als Pulver mit folgenden Kennwerte: mittlere Partikelgröße d₅₀ 3,5 µm, BET-Oberfläche 580 m²/g, Porenvolumen 0,3 cm³/g.

Monomeres ε-Caprolactam wurde in den Autoklav eingebracht. In einem separaten Gefäß wurde wie in Beispiel 1 eine 78-% ε-Caprolactam-Wasser-Starterlösung hergestellt und anschließend 15 Gew. % Zeolith 13X (bezogen auf die Starterlösung) unter ständigem Rühren bei Raumtemperatur eindispergiert.

Die frisch hergestellte Suspension wurde durch langsames Einrühren in schmelzflüssiges ε-Caprolactam im Autoklav bei Temperaturen von ca. 120°C zugegeben. Die Wassermenge der Suspension wurde dabei so eingestellt, dass sich bezogen auf das gesamte Reaktionsgemisch 4,0 Gew.% ergaben. Die Hydrolyse wurde innerhalb von 2 h bei einer Produkttemperatur von ca. 275°C und einem Systemdruck von ca. 8 bar durchgeführt. Im Anschluss an die Dekompressionsphase, bei der durch langsames, kontinuierliches Entspannen der Systemdruck abgebaut wurde, wurde die Polykondensation bei einer Produkttemperatur von ca. 275°C eingeleitet. Nach einer Verweilzeit von 3,0 h wurde das fertige Polymerisat modifiziert mit 3 Gew.% (bezogen auf eingesetztes Caprolactam) Zeolith erhalten, das folgende Kennwerte aufwies:
Zugfestigkeit: 75,3 MPa,
Bruchdehnung 20,7 ± 6,6 %,
Zug-E-Modul 2930 ± 45 MPa,
Schlagzähigkeit (DIN EN ISO 179/1eU, 23°C, trocken): kein Brechen (NB),
Kerbschlagzähigkeit(DIN EN ISO 179/1eA, 23°C, trocken): 50 kJ/m²

**Vergleichsbeispiele**

| Produkt | Hersteller | Schlagzähigkeit DIN EN ISO 179/1eU (23°C; trocken) | Kerbschlagzähigkeit DIN EN ISO 179/1eA (23°C; trocken) |
|---|---|---|---|
| Ultramid B3M6 | | | |
| (mineralverstärktes PA6) | BASF | 190 kJ/m² | 9 kJ/m² |
| Ultramid B3ZG3 | | | |
| (glasfaserverstärktes PA6) | BASF | 75 kJ/m² | 16 kJ/m² |

Die erfindungsgemäßen PA6 zeichnen sich durch einzigartige Schlagzähigkeit und Kerbschlagzähigkeit aus. Der Wert "NB" nach Charpy DIN EN ISO 179/1eA wurde mit keinem bekannten PA6-Typen erreicht.

Das erfindungsgemäße Verfahren ist kostengünstiger als bekannte Verfahren aus dem Stand der Technik, weil es einstufig ist; alle bekannten bzw. auf dem Markt befindlichen modifizierten PA6-Typen werden in einem mindestens 2-stufigen Prozess hergestellt; d.h. erst Herstellung des PA6 aus Caprolactam und anschließend Vermischen mit Verstärkern wie Glasfasern, etc.

## Patentansprüche

1. Verfahren zur Herstellung von modifiziertem Polyamid 6, **dadurch gekennzeichnet, dass** die Polymerisation von ε-Caprolactam in Gegenwart eines anorganischen Materials mit offener Porenstruktur durchgeführt wird, wobei das poröse anorganische Material eine BET-Oberfläche bestimmt nach ISO 9277 (1995) von 50 m²/g bis 3000 m²/g, ein Porenvolumen bestimmt nach ISO 9277 (1995) von 0,1 cm³/g bis 15,0 cm³/g und eine mittlere Partikelgröße d₅₀ bestimmt nach ISO 13320 von 0,5 µm bis 500 µm aufweist.

2. Verfahren gemäß Anspruch 1, wobei es sich bei dem porösen anorganischen Material um mindestens eines ausgewählt aus Silicagelen, Zeolithen und Aktivkohle handelt.

3. Verfahren gemäß Anspruch 1 oder 2, wobei das poröse anorganische Material eine BET-Oberfläche von 100 m²/g bis 1000 m²/g aufweist.

4. Verfahren gemäß Anspruch 3, wobei das poröse anorganische Material eine BET-Oberfläche von 200 m²/g bis 600 m²/g aufweist.

5. Verfahren gemäß einem der Ansprüche 1-4, wobei das poröse anorganische Material ein Porenvolumen von 0,1 cm³/g bis 5,0 cm³/g aufweist.

6. Verfahren gemäß Anspruch 5, wobei das poröse anorganische Material ein Porenvolumen von 0,3 cm³/g bis 1,5 cm³/g aufweist.

7. Verfahren gemäß einem der Ansprüche 1-6, wobei das poröse anorganische Material eine mittlere Partikelgröße d₅₀ von 0,7 µm bis 50 µm aufweist.

8. Verfahren gemäß Anspruch 7, wobei das poröse anorganische Material eine mittlere Partikelgröße d₅₀ von 1 µm bis 6 µm aufweist.

9. Verfahren gemäß Anspruch 1, wobei das poröse anorganische Material eine mittlere Partikelgröße d₅₀ von 1-6 µm, ein Porenvolumen im Bereich von 0,3 cm³/g bis 1,5 cm³/g und eine BET Oberfläche von 200 m²/g bis 600 m²/g aufweist.

10. Verfahren gemäß einem der Ansprüche 1 bis 9, wobei die Menge an porösem anorganischem Material 0,1 Gew.% bis 50 Gew.% bezogen auf das Gewicht des eingesetzten ε-Caprolactams beträgt.

11. Verfahren gemäß Anspruch 10, wobei die Menge an porösem anorganischem Material 0,5 Gew.% bis 15 Gew.% bezogen auf das Gewicht des eingesetzten ε-Caprolactams beträgt.

12. Verfahren gemäß Anspruch 10, wobei die Menge an porösem anorganischem Material 1 Gew.% bis 5 Gew.% bezogen auf das Gewicht des eingesetzten ε-Caprolactams beträgt.

13. Verfahren gemäß einem der Ansprüche 1 bis 12, wobei bei der Polymerisation zusätzlich mindestens ein Additiv ausgewählt aus Schaumverhütungsmittel, Stabilisatoren und Antioxidantien vorhanden ist.

14. Verfahren gemäß einem der Ansprüche 1 bis 13, wobei erst eine Starterlösung von ε-Caprolactam in Wasser hergestellt wird, welche 2-45 Gew.% der Gesamtmenge an einzusetzendem ε-Caprolactam enthält, und in die Starterlösung dann das poröse anorganische Material eingeführt wird.

15. Modifiziertes Polyamid 6, erhältlich durch das Verfahren von einem der Ansprüche 1 bis 14, umfassend ein poröses anorganisches Material, wobei sich die polymere Matrix auch innerhalb der Poren befindet.

16. Verwendung eines modifizierten Polyamids 6 gemäß Anspruch 15 zur Herstellung von Formkörpern, Folien, Fasern und Schäumen.

17. Verwendung gemäß Anspruch 16, wobei durch Spritzguss Bauteile für Autos oder Motorräder oder Gehäuseteile hergestellt werden.

18. Formkörper, Folien, Faser und Schäume erhältlich aus einem modifizierten Polyamid 6 gemäß Anspruch 15.

## Claims

1. Method for producing modified Polyamide 6, **characterized in that** the polymerization of ε-caprolactam is performed in the presence of an inorganic material having an open pore structure, wherein the porous inorganic material has a BET surface area determined according to ISO 9277 (1995) of 50 m²/g to 3000 m²/g, a pore volume determined according to ISO 9277 (1995) of 0.1 cm³/g to 15.0 cm³/g and an average particle size d₅₀ determined according to ISO 13320 of 0.5 µm to 500 µm.

2. Method according to claim 1, wherein the porous inorganic material is at least one selected from silica gels, zeolites, and activated carbon.

3. Method according to claim 1 or 2, wherein the porous inorganic material has a BET surface area of 100 m²/g to 1000 m²/g.

4. Method according to claim 3, wherein the porous inorganic material has a BET surface area of 200 m²/g to 600 m²/g.

5. Method according to any of claims 1 to 4, wherein the porous inorganic material has a pore volume of 0.1 cm³/g to 5.0 cm³/g.

6. Method according to claim 5, wherein the porous inorganic material has a pore volume of 0.3 cm³/g to 1.5 cm³/g.

7. Method according to any of claims 1 to 6, wherein the porous inorganic material has an average particle size d₅₀ of 0.7 µm to 50 µm.

8. Method according to claim 7, wherein the porous inorganic material has an average particle size d₅₀ of 1 µm to 6 µm.

9. Method according to claim 1, wherein the porous inorganic material has an average particle size d₅₀ of 1-6 µm, a pore volume in the range of 0.3 cm³/g to 1.5 cm³/g and a BET surface area of 200 m²/g to 600 m²/g.

10. Method according to any of claims 1 to 9, wherein the amount of porous inorganic material accounts for 0.1 wt.-% to 50 wt.-% based on the weight of ε-caprolactam used.

11. Method according to claim 10, wherein the amount of porous inorganic material accounts for 0.5 wt.-% to 15 wt.-% based on the weight of ε-caprolactam used.

12. Method according to claim 10, wherein the amount of porous inorganic material accounts for 1 wt.-% to 5 wt.-% based on the weight of ε-caprolactam used.

13. Method according to any of claims 1 to 12, wherein at least one additive is additionally present during the polymerization selected from anti-foaming agents, stabilizers and antioxidants.

14. Method according to any of claims 1 to 13, wherein first a starter solution of ε-caprolactam in water is prepared comprising 2-45 wt.-% of the total amount of ε-caprolactam to be used, and the porous inorganic material is then stirred into the starter solution.

15. Modified polyamide 6, obtainable by the method according to any of claims 1 to 14, comprising a porous inorganic material wherein the polymeric matrix is also present within the pores.

16. Use of a modified polyamide 6 according to claim 15 for the production of molded articles, films, fibers and foams.

17. Use according to claim 16, wherein components for cars, or motorcycles or housings are produced by means of injection molding.

18. Molded articles, films, fibers and foams obtainable from a modified polyamide 6 according to claim 15.

## Revendications

1. Procédé pour la préparation de polyamide 6 modifié, **caractérisé en ce que** la polymérisation d'ε-caprolactame est réalisée en présence d'un matériau inorganique présentant une structure ouverte à pores, le matériau inorganique poreux présentant une surface BET, déterminée selon la norme ISO 9277 (1995), de 50 m²/g à 3000 m²/g, un volume de pores, déterminé selon la norme ISO 9277 (1995), de 0,1 cm³/g à 15,0 cm³/g et une grosseur moyenne de particule d₅₀, déterminée selon la norme ISO 13320, de 0,5 µm à 500 µm.

2. Procédé selon la revendication 1, le matériau inorganique poreux étant au moins l'un choisi parmi les silicagels, les zéolithes et les charbons actifs.

3. Procédé selon la revendication 1 ou 2, le matériau inorganique poreux présentant une surface BET de 100 m²/g à 1000 m²/g.

4. Procédé selon la revendication 3, le matériau inorganique poreux présentant une surface BET de 200 m²/g à 600 m²/g.

5. Procédé selon l'une quelconque des revendications 1-4, le matériau inorganique poreux présentant un volume de pores de 0,1 cm³/g à 5,0 cm³/g.

6. Procédé la revendication 5, le matériau inorganique poreux présentant un volume de pores de 0,3 cm³/g à 1,5 cm³/g.

7. Procédé selon l'une quelconque des revendications 1-6, le matériau inorganique poreux présentant une grosseur moyenne de particule d₅₀ de 0,7 µm à 50 µm.

8. Procédé selon la revendication 7, le matériau inorganique poreux présentant une grosseur moyenne de particule d₅₀ de 1 µm à 6 µm.

9. Procédé selon la revendication 1, le matériau inorganique poreux présentant une grosseur moyenne de particule d₅₀ de 1-6 µm, un volume de pores dans la plage de 0,3 cm³/g à 1,5 cm³/g et une surface BET de 200 m²/g à 600 m²/g.

10. Procédé selon l'une quelconque des revendications 1 à 9, la quantité de matériau inorganique poreux étant de 0,1% en poids à 50% en poids par rapport au poids d'ε-caprolactame utilisé.

11. Procédé selon la revendication 10, la quantité de matériau inorganique poreux étant de 0,5% en poids à 15% en poids par rapport au poids d'ε-caprolactame utilisé.

12. Procédé selon la revendication 10, la quantité de matériau inorganique poreux étant de 1% en poids à 5% en poids par rapport au poids d'ε-caprolactame utilisé.

13. Procédé selon l'une quelconque des revendications 1 à 12, au moins un additif, choisi parmi les agents d'inhibition de mousse, les stabilisants et les antioxydants, étant en outre présent lors de la polymérisation.

14. Procédé selon l'une quelconque des revendications 1 à 13, une solution de départ d'ε-caprolactame dans l'eau, contenant 2-45% en poids de la quantité totale d'ε-caprolactame à utiliser, étant d'abord préparée et le matériau inorganique poreux étant ensuite délayé dans la solution de départ.

15. Polyamide 6 modifié, pouvant être obtenu par le procédé selon l'une quelconque des revendications 1 à 14, comprenant un matériau inorganique poreux, la matrice polymère se trouvant également à l'intérieur des pores.

16. Utilisation d'un polyamide 6 modifié selon la revendication 15 pour la fabrication de corps façonnés, de feuilles, de fibres et de mousses.

17. Utilisation selon la revendication 16, des pièces pour voitures ou motocyclettes ou des parties de boîtier étant préparées par moulage par injection.

18. Corps façonnés, feuilles, fibres et mousses pouvant être obtenus à partir d'un polyamide 6 modifié selon la revendication 15.
